# EUROPÄISCHE PATENTANMELDUNG

(11) **EP 3 859 458 A1**
(43) Veröffentlichungstag der Anmeldung: **04.08.2021**
(21) Anmeldenummer: 20154817.9
(22) Anmeldetag: 31.01.2020
(51) Int. Cl.: G05B 17/02

(54) **VERFAHREN UND VORRICHTUNG ZUM ENTWURF EINES REGELKREISES**

(71) Anmelder: Robert Bosch GmbH, 70442 Stuttgart (DE)
(72) Erfinder: Trachte, Adrian, 70563 Stuttgart (DE); Zips, Patrik, 1210 Wien (AT); Ophey, Julian, 71229 Leonberg (DE); Seiler-Thull, Daniel, 70599 Stuttgart (DE); Gurtner, Markus, 1050 Wien (AT); Atak, Muhammed, 73770 Denkendorf (DE)

(57) **Zusammenfassung**

Verfahren (40, 50) zum Entwurf eines Regelkreises (R1, R2, 41), gekennzeichnet durch folgende Merkmale:
- eine Simulation (42, 52) des geschlossenen Regelkreises (R1, R2, 41) wird durchgeführt,
- anhand der Simulation (42, 52) wird der Regelkreis (R1, R2, 41) einer Leistungsbeurteilung (10, 20, 30, 43, 53) unterzogen und
- durch Rückwirkung (44, 45, 46, 54, 55, 56) der Leistungsbeurteilung (10, 20, 30, 43, 53) auf den Entwurf wird der Regelkreis (R1, R2, 41) verbessert.

## Beschreibung

Die vorliegende Erfindung betrifft ein Verfahren zum Entwurf eines Regelkreises. Die vorliegende Erfindung betrifft darüber hinaus eine entsprechende Vorrichtung, ein entsprechendes Computerprogramm sowie ein entsprechendes Speichermedium.

### Stand der Technik

In Regelungs- und Automatisierungstechnik wird jedweder in sich geschlossene Wirkungsablauf zur Beeinflussung einer physikalischen Größe in einem technischen Prozess als Regelkreis bezeichnet. Der aktuelle oder Istwert der Größe wird hierzu an einen Regler zurückgeführt, der im Wege einer negativen Rückkopplung jeglicher Abweichung vom angestrebten oder Sollwert entgegenwirkt.

Es zählt hierbei zu den Aufgaben des Reglers, das Zeitverhalten der Regelgröße bezüglich des statischen und dynamischen Verhaltens gemäß vorgegebenen Erfordernissen festzulegen. Zur Erfüllung auch widersprüchlicher Anforderungen - etwa hinsichtlich Führungs- und Störverhalten - sind oft aufwändigere Regelkreisstrukturen erforderlich. Die Güte derartiger Regler ist von großer Bedeutung, da beispielsweise unzureichend geregelte industrielle Prozesse bei übermäßiger Abweichung der Regelgröße ein beträchtliches Sicherheitsrisiko bergen.

Bekanntermaßen zeigen verschiedene Gütekriterien bei Änderung einzelner Regelungsparameter ein teilweise entgegengesetztes Verhalten. Erhöht man beispielsweise die Kreisverstärkung, verkürzt sich die Anstiegszeit; die Ausregelzeit und die Überschwingweite vergrößern sich hingegen. Der Entwurf eines gattungsmäßigen Regelkreises und dessen Optimierung im Hinblick auf Führungs-, Stör- und Robustheitsverhalten stellt daher eine besondere Herausforderung dar.

DE102007050026A1 offenbart ein Verfahren zum Überwachen eines Regelkreises in einem System, insbesondere in einem Motorsystem in einem Kraftfahrzeug. Das Verfahren sieht vor, eine Kennzahl aus einem Vorgabewert und einer Systemgröße des Regelkreises während eines oder mehrerer Zustandsänderungen zu ermitteln und einen Fehler abhängig von der ermittelten Kennzahl festzustellen.

### Offenbarung der Erfindung

Die Erfindung stellt ein Verfahren zum Entwurf eines Regelkreises, eine entsprechende Vorrichtung, ein entsprechendes Computerprogramm sowie ein entsprechendes maschinenlesbares Speichermedium gemäß den unabhängigen Ansprüchen bereit.

Dem erfindungsgemäßen Ansatz liegt die Erkenntnis zugrunde, dass Regelkreise nach dem Stand der Technik von Entwicklungsingenieuren entworfen und parametriert werden. Es gibt eine Vielzahl von möglichen Ausführungen, deren Auswahl auf dem System und der Erfahrung des Ingenieurs beruht. Neben dieser Auswahl der Regelkreisstruktur ist vor allem die optimale Einstellung der Vielzahl von Regelparametern äußerst zeitintensiv; ein objektives Maß zur Beurteilung und Auswahl dieser Parameter ist nicht verfügbar. Für lineare Regelkreise existieren zwar automatisierte Methoden zur Abstimmung der Parameter, die jedoch sehr restriktive Voraussetzungen aufweisen. Außerdem erfordert ihre Anwendung die Vorgabe wesentlicher Merkmale des Regelkreises.

Möglich ist zwar der optimierungsbasierte robuste Entwurf einer Störungskompensation zur Vorsteuerung an einem einfachen autoregressiven Modell der gleitenden Mittel (*auto-regressive moving average,* ARMA). Einem solchen Entwurf können spezifische Unsicherheitsbereiche der Modellparameter zugrunde gelegt werden. Die Annahme der bekannten bzw. messbaren Störung und des linearen zeitinvarianten Modellcharakters stellt hierbei jedoch eine wesentliche Einschränkung dar.

Im Rahmen einer allgemeinen Betrachtung und Entwicklung von teils hochgradig nichtlinearen Regelkreisen ist der beschriebene Ansatz ferner nur eingeschränkt anwendbar, da er durch die Heranziehung der stationären Störungsunterdrückung als Gütefunktion nur einen Teilaspekt der Anforderungen an Regelkreise berücksichtigt.

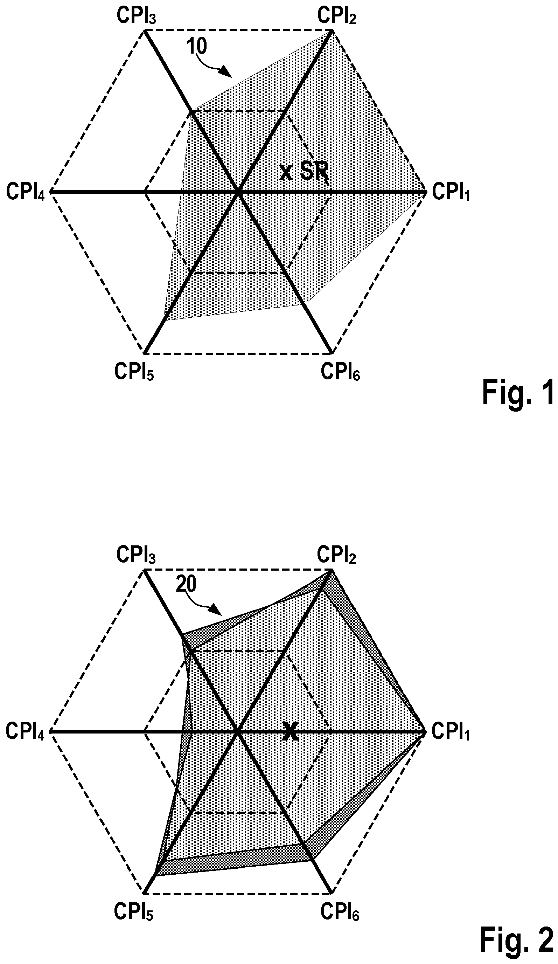

Einen Grundgedanken des vorgeschlagenen Verfahrens bildet daher der systemunabhängige Entwurf von Regelkreisen mit Hilfe einer mehrdimensionalen Beurteilung der Regelgüte. Dabei wird auf Basis von vertrauenswürdigen Simulationen die Regelgüte anhand mehrerer Gradmesser (*control performance indicators,* CPIs) bewertet, die normiert und somit systemunabhängig sind. Ein Beispiel für eine solche Leistungsbeurteilung (10) anhand sechs derartiger Gütekriterien (CPI₁, CPI₂, CPI₃, CPI₄, CPI₅, CPI₆) und des resultierenden Schwerpunktes (SP) ist Figur 1 zu entnehmen. Auf dieser Grundlage lassen sich in den Simulationsdurchgängen systematisch die Parameter oder gar Struktur des Reglers verändern und in unterschiedlichsten, optimierungsbasiert ausgewählten Testfällen überprüfen.

In Figur 2 ist die Gesamtperformance für drei verschieden ReglerKonfigurationen mit nominellen Systemparametern dargestellt. Die abbildungsgemäße Leistungsbeurteilung (20) liefert ein objektives Maß der Güte im günstigsten und ungünstigsten Fall sowie der Varianz bezüglich der Testszenarien für sämtliche evaluierten Reglerkonfigurationen. Dieser Ansatz trägt dem Umstand Rechnung, dass es für einen geschlossenen Regelkreis erforderlich ist, die spezifizierten Anforderungen an die Regelgüte auch unter widrigsten Umständen zu erfüllen und im gesamten Betriebsbereich ein gleichmäßiges, hochwertiges Verhalten zu gewährleisten.

Ein Vorzug der erfindungsgemäßen Lösung liegt vor diesem Hintergrund in der intuitiven Interpretierbarkeit der Bewertung verschiedener Regelkreisstrukturen. Indem der Benutzer auf diese Weise in die Lage versetzt wird, gezielte Entwurfsentscheidungen zu treffen, lässt sich die Funktionssicherheit des Regelkreises maßgeblich erhöhen.

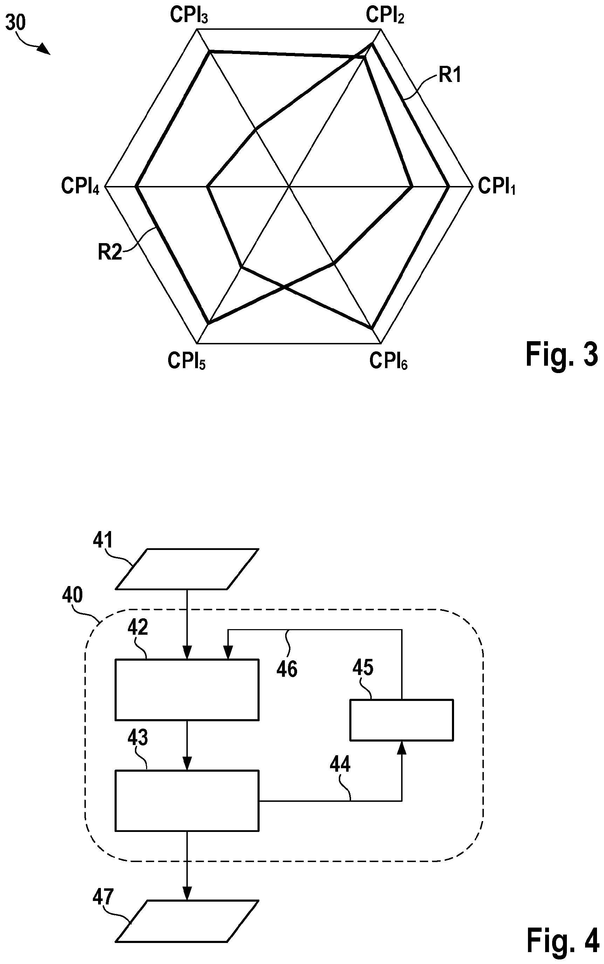

Durch die in den abhängigen Ansprüchen aufgeführten Maßnahmen sind vorteilhafte Weiterbildungen und Verbesserungen des im unabhängigen Anspruch angegebenen Grundgedankens möglich. So kann vorgesehen sein, anhand der Leistungsbeurteilung eine Auswahl von Testszenarien zu treffen, deren Parameter einer weiteren Simulation und somit letztlich der Bewertung von Regelgüte oder Robustheit des betrachteten Regelkreises zugrunde gelegt werden. Anhand anwendungsspezifischer Vorgaben, welche sich etwa für Stromregelkreise, Positionsregler usw. deutlich unterscheiden - man vergleiche etwa die in Figur 3 in ihrer Leistungsbeurteilung (30) gegenübergestellten Regler R1 und R2 -, wird so ein robuster und zuverlässiger Entwurf von Regelkreisen ermöglicht.

Gemäß einem weiteren Aspekt kann die Auswahl der Testszenarien durch suchbasierte Optimierung anhand einer von der Leistungsbeurteilung abhängigen Kostenfunktion getroffen werden. Ein solches suchbasiertes Testen (*search-based testing,* SBT) gewährleistet eine zuverlässige Abdeckung des Testraums.

Gemäß einem weiteren Aspekt kann vorgesehen sein, dass der Regelkreis einen Regler vorgegebener Struktur umfasst, dessen Parameter anhand einer von der Leistungsbeurteilung abhängigen Gütefunktion optimiert werden. Eine entsprechende Ausführungsform eröffnet die Möglichkeit zum Bewerten vorgegebener Regelkreisstrukturen sowie zur automatisierten oder zumindest unterstützten Leistungsbewertung vordefinierter Standardkonfigurationen.

Gemäß einem weiteren Aspekt kann vorgesehen sein, dass die Leistungsbeurteilung des Regelkreises gemäß vorgegebener CPIs oder anderweitiger Gütekriterien erfolgt, um eine objektive ganzheitliche Bewertung der Regelgüte zu erlauben. Anhand derlei einheitlicher Kriterien zur Sicherung der Qualität der Entwicklungen lässt sich die durchgängige Nachvollziehbarkeit des Reglerentwurfs sicherstellen. Die auf diesem Wege erlangte Kenntnis der Sensitivität einzelner CPIs bezüglich der variierten Reglerparameter gestattet zudem einen gezielteren Einsatz der verfügbaren Rechenleistung. Dies wiederum steigert letztlich die Effizienz des gesamten Optimierungsverfahrens.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 die beispielhafte Beurteilung eines Regelkreises anhand eines Netzdiagrammes mit sechs Achsen, welche sechs zu einem Grad von 100 %, 100 %, 50 %, 30 %, 80 % bzw. 70 % erfüllten Gütekriterien entsprechen.
Figur 2 eine entsprechende Darstellung für drei unterschiedliche Konfigurationen eines Reglers.
Figur 3 eine beispielhafte Vorgabe der Regler-Spezifikationen für zwei unterschiedliche Systemklassen.
Figur 4 das Flussdiagramm eines Verfahrens gemäß einer ersten Ausführungsform.
Figur 5 das Flussdiagramm eines Verfahrens gemäß einer zweiten Ausführungsform.
Figur 6 schematisch einen Arbeitsplatzrechner gemäß einer dritten Ausführungsform.

### Ausführungsformen der Erfindung

Figur 4 illustriert ein Verfahren (40) gemäß einer ersten Ausführungsform. Der entworfene Regelkreis (41) wird demnach in zunächst bekannter Weise einer sogenannten Closed-Loop-Simulation (42) unterworfen. Erfindungsgemäß wird der Regelkreis (41) sodann einer Leistungsbeurteilung (10, 20, 30, 43, 53) gemäß vorgegebener Gütekriterien (CPI₁, CPI₂, CPI₃, CPI₄, CPI₅, CPI₆-vergleiche Figuren 1 bis 3) unterzogen, welche eine verfeinerte Auswahl (45) von Testszenarien ermöglicht, deren Parameter (46) auf die Simulation (42) zurückwirken. Anhand besagter Leistungsbeurteilung (43) können zudem Regelgüte und Robustheit (47) des simulierten Regelkreises (41) bewertet werden.

Die Auswahl (45) der Testszenarien erfolgt hierbei vorzugsweise im Wege einer suchbasierten Testoptimierung, als deren Kostenfunktion (44) wiederum unmittelbar oder mittelbar die Leistungsbeurteilung (43) herangezogen werden mag.

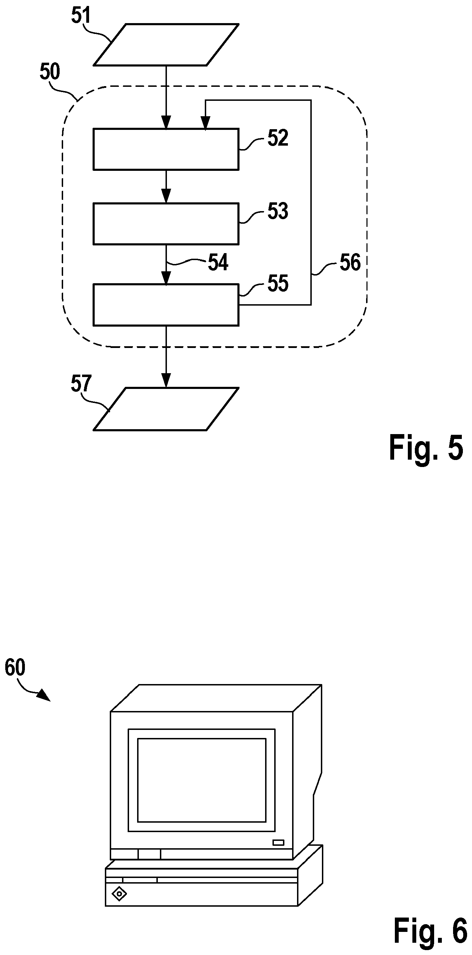

Figur 5 veranschaulicht ein Verfahren (50) gemäß einer zweiten Ausführungsform. Die Struktur (51) des Reglers ist hier zum Beispiel durch einen menschlichen Experten vorgegeben, unterliegt gleichwohl veränderlichen Parametern, welche - anhand einer von der Leistungsbeurteilung (53) abhängigen Gütefunktion (54) - einer stetigen Optimierung (55) unterzogen werden. Letztere wirkt im Sinne einer iterativen Feinabstimmung (*tuning*) über den jeweils nächsten Regler-Parametersatz (56) schließlich auf die Simulation (52) zurück.

Durch die beschriebene Optimierung (55) werden somit im Ergebnis die gemäß der durch die Leistungsbeurteilung (53) definierten Gütefunktion (54) optimalen Parameter (57) des Reglers ermittelt.

Ein solches Verfahren (40, 50) kann beispielsweise in Software oder Hardware oder in einer Mischform aus Software und Hardware beispielsweise in einem Arbeitsplatzrechner (60) implementiert sein, wie die schematische Darstellung der Figur 6 verdeutlicht.

## Patentansprüche

1. Verfahren (40, 50) zum Entwurf eines Regelkreises (R1, R2, 41),
**gekennzeichnet durch** folgende Merkmale:
- eine Simulation (42, 52) des geschlossenen Regelkreises (R1, R2, 41) wird durchgeführt,
- anhand der Simulation (42, 52) wird der Regelkreis (R1, R2, 41) einer Leistungsbeurteilung (10, 20, 30, 43, 53) unterzogen und
- durch Rückwirkung (44, 45, 46, 54, 55, 56) der Leistungsbeurteilung (10, 20, 30, 43, 53) auf den Entwurf wird der Regelkreis (R1, R2, 41) verbessert.

2. Verfahren (40, 50) nach Anspruch 1,
**gekennzeichnet durch** folgende Merkmale:
- anhand der Leistungsbeurteilung (10, 20, 30, 43, 53) wird eine Auswahl (45) von Testszenarien mit Parametern (46) getroffen, welche der Simulation (42, 52) zugrunde gelegt werden, und
- Regelgüte oder Robustheit (47) des simulierten Regelkreises (R1, R2, 41) werden anhand der Leistungsbeurteilung (10, 20, 30, 43, 53) bewertet.

3. Verfahren (40, 50) nach Anspruch 2,
**gekennzeichnet durch** folgende Merkmale:
- die Auswahl (45) der Testszenarien umfasst eine suchbasierte Optimierung und
- die Optimierung erfolgt anhand einer von der Leistungsbeurteilung (10, 20, 30, 43, 53) abhängigen Kostenfunktion (44).

4. Verfahren (40, 50) nach einem der Ansprüche 1 bis 3,
**gekennzeichnet durch** folgende Merkmale:
- der Regelkreis (R1, R2, 41) umfasst einen Regler vorgegebener Struktur (51) mit Parametern, welche einer Optimierung (55) unterzogen werden, und
- die Optimierung (55) erfolgt anhand einer von der Leistungsbeurteilung (10, 20, 30, 43, 53) abhängigen Gütefunktion (54).

5. Verfahren (40, 50) nach Anspruch 4,
**gekennzeichnet durch** folgende Merkmale:
- die Rückwirkung (44, 45, 46, 54, 55, 56) wird durch einen mittels der Optimierung (55) angepassten Satz (56) der Parameter ausgeübt und
- durch die Optimierung (55) werden die gemäß der Gütefunktion (54) optimalen Parameter (57) des Reglers ermittelt.

6. Verfahren (40, 50) nach einem der Ansprüche 1 bis 5,
**gekennzeichnet durch** folgendes Merkmal:
- die Leistungsbeurteilung (10, 20, 30, 43, 53) des Regelkreises (R1, R2, 41) erfolgt gemäß vorgegebener Gütekriterien (CPI₁, CPI₂, CPI₃, CPI₄, CPI₅, CPI₆).

7. Verfahren (40, 50) nach einem der Ansprüche 1 bis 6,
**gekennzeichnet durch** eines der folgenden Merkmale:
- mittels des Regelkreises (R1, R2, 41) wird ein fahrzeugtechnischer Prozess gesteuert oder
- mittels des Regelkreises (R1, R2, 41) wird ein Fertigungsprozess gesteuert.

8. Computerprogramm, welches eingerichtet ist, das Verfahren (40, 50) nach einem der Ansprüche 1 bis 7 auszuführen.

9. Maschinenlesbares Speichermedium, auf dem das Computerprogramm nach Anspruch 8 gespeichert ist.

10. Vorrichtung (60), die eingerichtet ist, das Verfahren (40, 50) nach einem der Ansprüche 1 bis 7 auszuführen.
